# EUROPEAN PATENT APPLICATION

(11) **EP 4 814 546 A1**
(43) Date of publication of application: **30.09.2026**
(21) Application number: 26163099.0
(22) Date of filing: 09.03.2026
(51) Int. Cl.: G02B 1/00, G02B 1/118, G02B 5/18, G02B 27/00, G02B 3/08

(54) **OPTICAL ELEMENT, IMAGE SENSOR, OPTICAL SYSTEM, AND IMAGE PICKUP APPARATUS**

(30) Priority: 25.03.2025 JP 2025050532
(71) Applicant: Canon Kabushiki Kaisha, Tokyo 146-8501 (JP)
(72) Inventor: ISHIBASHI, Tomohiko, Tokyo (JP)
(74) Representative: WESER & Kollegen Patentanwälte PartmbB

(57) **Abstract**

An optical element (100) includes a substrate (1), and a concavo-convex structure (2) formed on the substrate. The concavo-convex structure has a plurality of structures (21) that are periodically arranged and include at least one of a concave element and a convex element. A plurality of annuli arranged along a radial direction of the substrate are formed on the substrate. Each of the plurality of annuli includes, along the radial direction, a first region (R1) and a second region (R2) having a phase smaller than that of the first region. The plurality of structures include a plurality of first structures disposed in the first region and a plurality of second structures disposed in the second region. A base layer (22) is provided between the substrate and at least one of the plurality of second structures.

## Description

### TECHNICAL FIELD

The present disclosure relates to an optical element, an image sensor, an optical system, and an image pickup apparatus.

### BACKGROUND

In some conventional structures for an optical element (metalens) which has a fine concavo-convex structure (uneven structure or undulation structure) formed on a surface of a substrate and a light condensing or diverging function by utilizing diffraction, a thin film is laminated on the fine concavo-convex structure in order to suppress reflectance for incident light (see U.S. Patent Application Publication No. 2024/0012177).

### SUMMARY

The present disclosure in its first aspect provides an optical element as specified in claims 1 to 19.

The present disclosure in its second aspect provides an image sensor as specified in claim 20.

The present disclosure in its third aspect provides an optical system as specified in claim 21.

The present disclosure in its fourth aspect provides an image pickup apparatus as specified in claim 22.

Features of the present disclosure will become apparent from the following description of embodiments with reference to the attached drawings. The following description of embodiments is described by way of example.

### BRIEF DESCRIPTION OF THE DRAWINGS

Figs. 1A to 1C are structural diagrams of an optical element according to Example 1.
Figs. 2A and 2B are structural diagrams of an optical element according to a comparative example.
Figs. 3A and 3B are explanatory diagrams of an element filling factor.
Fig. 4 illustrates a relationship between a normalized phase modulation amount of concavo-convex elements and reflectance in Example 1 and the comparative example.
Figs. 5A, 5B, and 5C are explanatory diagrams of a method for manufacturing an optical element.
Fig. 6 is an explanatory diagram of an offset layer.
Figs. 7A and 7B are structural diagrams of an optical element according to Example 2.
Fig. 8 illustrates a relationship between a normalized phase modulation amount of concavo-convex elements and reflectance in Example 2 and the comparative example.
Fig. 9 illustrates a relationship between a normalized phase modulation amount of concavo-convex elements and reflectance in Example 3 and the comparative example.
Figs. 10A and 10B are structural diagrams of an optical element according to Example 4.
Fig. 11 illustrates a relationship between a normalized phase modulation amount of concavo-convex elements and reflectance in Example 4 and the comparative example.
Figs. 12A, 12B, 12C, and 12D are explanatory diagrams of modified examples of concavo-convex elements.
Fig. 13 is an explanatory diagram of an optical system including the optical element according to each example.
Fig. 14 is an explanatory diagram of an image pickup apparatus including the optical element according to any one of the examples.

### DESCRIPTION OF THE EMBODIMENTS

Referring now to the accompanying drawings, a detailed description will be given of embodiments according to the present disclosure. Corresponding elements in respective figures will be designated by the same reference numerals, and a duplicate description thereof will be omitted. Each of the embodiments of the present invention described below can be implemented solely or as a combination of a plurality of the embodiments or features thereof where necessary or where the combination of elements or features from individual embodiments in a single embodiment is beneficial.

### EXAMPLE 1

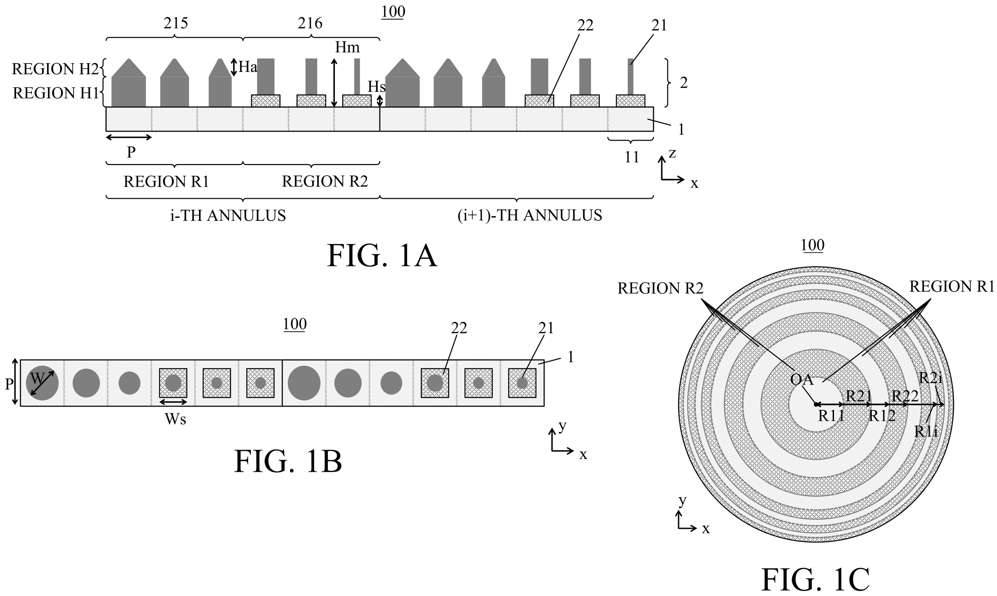

Figs. 1A and 1B are structural diagrams of an optical element 100 according to the present example. Fig. 1A is an enlarged sectional view of the optical element 100 when viewed from the y-axis direction (in the xz plane). Fig. 1B is an enlarged top view of the optical element 100 when viewed from the z-axis direction (optical axis direction) (in the xy plane). Fig. 1C is an overall top view of the optical element 100 when viewed from the z-axis direction. In each example, the optical axis direction of the optical element and the thickness direction of the substrate 1 coincide with the z-axis direction.

The optical element 100 includes a substrate 1 and an concavo-convex structure (a plurality of pillars) 2 formed on the substrate 1. In the present example, the substrate 1 is a transparent flat plate made of synthetic quartz having a thickness of 0.775 mm. The substrate 1 may alternatively be a plane mirror that reflects incident light, or may have a curved surface with an arbitrary curvature. The material of the substrate 1 is not limited to synthetic quartz, and may be inorganic glass, an organic material such as plastic, ceramics, or metal.

The concavo-convex structure 2 includes a plurality of concavo-convex elements (a plurality of structures) 21 including at least one of concave elements and convex elements that are periodically arranged in a radial direction (for example, the x-axis direction and the y-axis direction) of the substrate 1 (optical element 100), and a base layer 22 having a substantially constant thickness in the thickness direction (an approximately flat plate shape). A plurality of annuli (annulus zones) are formed on the substrate 1 so as to extend in a circumferential direction from the center of the optical element 100 and to be arranged along the radial direction. By forming periodic phase differences (annuli) along the radial direction of the substrate 1, a focusing or diverging action and a polarization action are imparted to incident light. The plurality of annuli include, in order from the center side of the optical element 100 in the radial direction, an i-th annulus (where i is a natural number, first annulus) and an (i+1)-th annulus (second annulus). Each of the plurality of annuli includes, along the radial direction, a region R1 (first region) and a region R2 (second region) having a phase smaller than that of the region R1. More specifically, the region R1 is a region in which the phase is greater than a predetermined normalized phase, and the region R2 is a region in which the phase is smaller than the predetermined normalized phase. In the present example, the region R1 is disposed closer to the center of the optical element 100 than the region R2 in the radial direction.

The optical element 100 according to the present example has positive refractive power and provides a focusing action to incident light. However, in the case of an optical element having negative refractive power, the annuli include, in order from the center side of the optical element, a region R2 (second region) having a smaller phase and a region R1 (first region).

While the plurality of annuli are concentrically arranged in the xy plane, a structure in which annuli are provided only in one of the x-axis direction and the y-axis direction may also be adopted.

The concavo-convex elements 21 include a plurality of first structures 215 disposed in the region R1 and a plurality of second structures 216 disposed in the region R2. In the region R2, the plurality of second structures 216 are formed on the substrate 1 via the base layer 22. In the region R1, the plurality of first structures 215 are formed directly on the substrate 1 without the base layer 22. The plurality of first structures 215 include, in order from the side of the substrate 1 in the z-axis direction, a region H1 (third region) having a constant radial width and a region H2 (fourth region) in which the radial width gradually decreases with increasing distance from the substrate 1. That is, an element filling factor of the region H2, described later, is lower than an element filling factor of the region H1. The plurality of first structures 215 have mutually different radial widths. Similarly, the plurality of second structures 216 have mutually different radial widths.

The concavo-convex structure 2 provides a focusing or diverging action by imparting a phase difference to light passing through the concavo-convex structure 2. By imparting different phase differences in the x-axis direction and the y-axis direction, a polarization state can be changed, or different focusing or diverging actions can be provided for each incident polarization. By forming a phase distribution using annuli in which a phase difference of 2nπ (n is an integer of 1, 2, ... and represents a designed diffraction order or a diffraction order) is periodically repeated concentrically, a focusing or diverging action substantially equivalent to that of a diffractive optical element can be obtained at a designed wavelength.

In the present example, the concavo-convex elements 21 are convex cylindrical elements made of a dielectric material Si₃N₄. The concavo-convex elements 21 are not limited to convex cylindrical elements, and may be polygonal columns, polygonal pyramids, cones, arbitrary concave elements, or combinations thereof. The material of the concavo-convex elements 21 may be GaN, GaP, GaAs, Si, SiC, Al₂O₃, SiO₂, or the like.

The concavo-convex elements 21 are disposed at centers of unit segment sections 11 that are divided into square shapes along the radial direction of the substrate 1. When a width (pitch) of each unit segment section 11 is smaller than a wavelength of incident light, the incident light is phase-modulated according to an effective refractive index determined from an element filling factor, which is a ratio of a volume occupied by the concavo-convex structure 2 in each unit segment section 11, regardless of the shape of the concavo-convex elements 21. For example, in a case where the wavelength of incident light is in a visible light range (400 to 700 nm), the pitch may be less than 400 nm. A smaller pitch may be used to suppress unnecessary diffracted light and reflected light.

In the regions R1 and R2 within the i-th annulus, the concavo-convex elements 21 have shapes with mutually different radial widths, thereby forming a phase distribution of 2nπ within the i-th annulus. Let R1i and R2i are radii of the regions R1 and R2 of the i-th annulus, respectively. As illustrated in Fig. 1C, the regions R1 and R2 are alternately provided concentrically along the radial direction such that R1i < R2i.

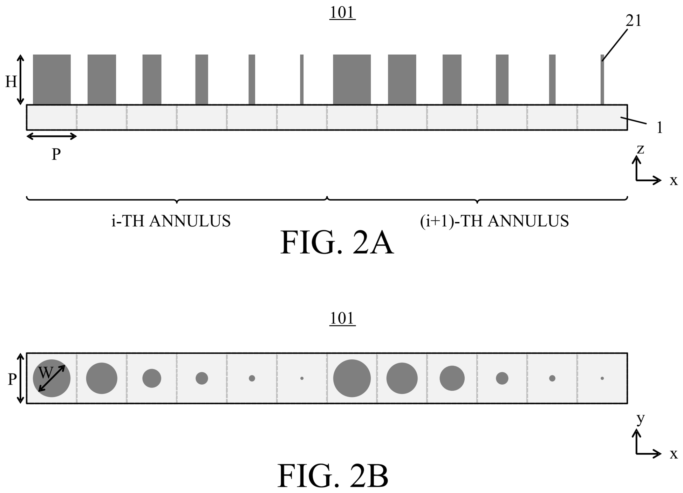

Figs. 2A and 2B are structural diagrams of an optical element 101 according to a comparative example in which a base layer is not provided. In order to form a phase distribution of 2nπ within an annulus, the width (diameter) of cylindrical elements serving as the concavo-convex elements 21 is changed to vary the element filling factor of the concavo-convex elements 21 within each unit segment section. That is, as the diameter of the cylindrical elements decreases, the element filling factor decreases, thereby forming a desired phase distribution.

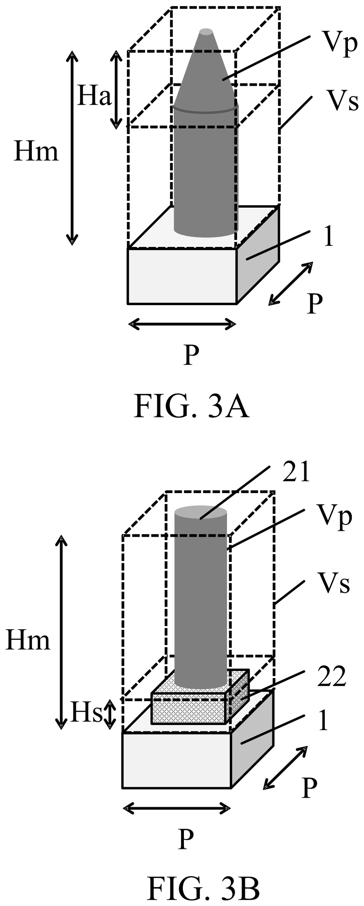

Figs. 3A and 3B are explanatory diagrams of the element filling factor. Figs. 3A and 3B illustrate the element filling factors in the regions R1 and R2, respectively. The element filling factor in a range from a surface of the substrate 1 in the regions R1 and R2 to a position at a height Hm from the surface of the substrate 1 is a ratio of a volume Vp of the concavo-convex elements 21 to a volume Vs defined by a bottom area P × P and the height Hm. An effective refractive index of the concavo-convex elements 21 is approximately expressed by the following equation: ${{n}_{eff}}^{2} = \frac{\left({V}_{s}-{V}_{p}\right) {{n}_{0}}^{2} + {V}_{p} {{n}_{m}}^{2}}{{V}_{s}}$ where n₀ is a refractive index of an atmosphere covering the concavo-convex elements 21 and nₘ is a refractive index of a material forming the concavo-convex elements 21.

As a strict method for calculating the effective refractive index, the effective refractive index may be calculated from a ratio of a phase delay amount when light passes through the concavo-convex elements 21, obtained by a finite-difference time-domain (FDTD) method or rigorous coupled-wave analysis (RCWA), to a phase delay amount when the element filling factor of the concavo-convex elements 21 is 1.

In the optical element 101 illustrated in Figs. 2A and 2B, since the element filling factor is adjusted only by the diameter of the cylindrical elements, the diameter is varied significantly. Thus, a difference between a minimum diameter and a maximum diameter of the cylindrical elements tends to increase, and a variation amount of the element filling factor also increases. In a case where light passes through the optical element 101 along a direction perpendicular to the radial direction, the cylindrical elements phase-modulate the light according to the effective refractive index determined from the element filling factor. In a case where the variation amount of the element filling factor is large, a variation of the effective refractive index also tends to be large, and therefore a variation of reflectance in the radial direction increases. In general, it is known that reflection can be suppressed by providing a thin film of a transparent dielectric or the like and utilizing an interference effect. However, in a case where the variation of the effective refractive index in the radial direction is large, it is difficult to obtain an effective interference effect over an entire region by merely providing a thin film having the same structure over the entire optical element, and thus it is difficult to suppress reflection.

In the region R2 where the diameter of the cylindrical elements is relatively small, the effective refractive index of the concavo-convex elements 21 is low, and a difference in effective refractive index at an interface with the substrate 1 is large, so that reflection tends to increase. Accordingly, in the present example, in the region R2, the base layer 22 is provided between the concavo-convex elements 21 and the substrate 1, and an antireflection effect between the concavo-convex elements 21 and the substrate 1 is obtained by properly setting an effective refractive index of the base layer 22. In the present example, the base layer 22 is provided between the substrate 1 and each of the plurality of second structures 216, but the disclosure is not limited to this example. The base layer may be provided at a location where the difference in effective refractive index with the substrate 1 becomes large. That is, the base layer may be provided between the substrate 1 and at least one of the plurality of second structures 216.

In the region R1 where the diameter of the cylindrical elements is relatively large, the effective refractive index of the concavo-convex elements 21 becomes high, and reflection at an interface between the concavo-convex elements 21 and the ambient medium tends to increase. Accordingly, in the present example, in the region R1, an antireflection effect can be obtained by providing, in a direction perpendicular to the radial direction of the optical element 100, a region H2 having an effective refractive index smaller than that of the concavo-convex elements 21 on a side opposite to the substrate 1. For example, in the region H2, the element filling factor may be reduced and the effective refractive index may be decreased by gradually reducing a radius of each cylinder as the distance from the substrate 1 increases. In the region R2, although the region H2 is not provided for the concavo-convex elements 21, the region H2 may also be provided.

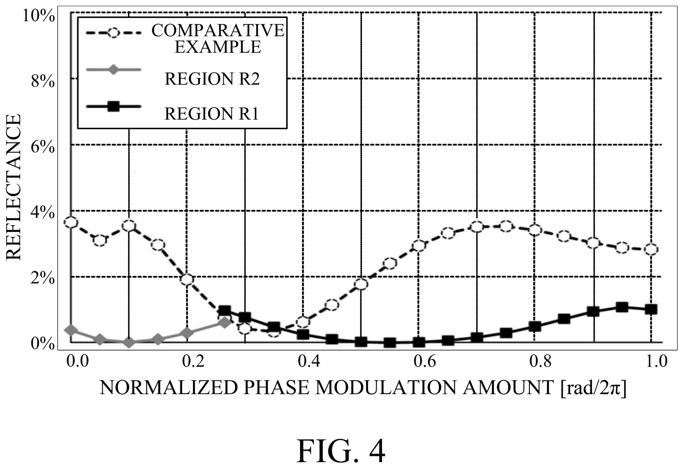

Fig. 4 illustrates a relationship between the normalized phase modulation amount and the reflectance of the concavo-convex elements 21 in the present example and the comparative example. Properly setting the structures of the concavo-convex elements 21 in the regions R1 and R2 can reduce the reflectance in the present example compared with the comparative example in a range in which a phase modulation of 2nπ (n = 1 in the present example) is obtained.

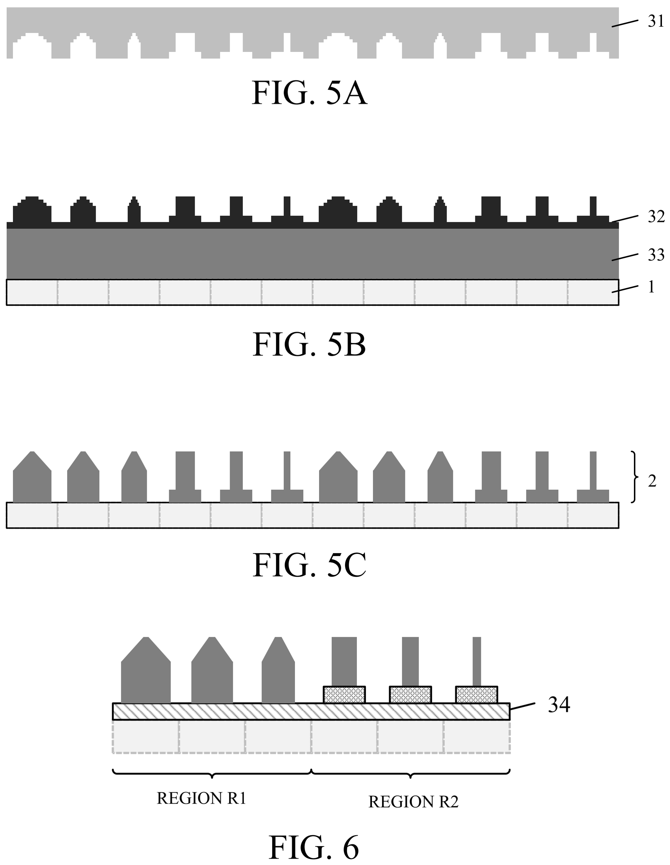

Next, a method for manufacturing the optical element 100 will be described with reference to Figs. 5A, 5B, and 5C. The optical element 100 can be manufactured by a lithography technique. Figs. 5A, 5B, and 5C are explanatory diagrams illustrating a manufacturing method of the optical element 100, and illustrate a process of manufacturing the optical element 100 by nanoimprint lithography. Fig. 5A illustrates a mold 31. The mold 31 has a shape obtained by inverting the concavo-convex shape of the concavo-convex elements 21 formed by electron beams, lasers, lithography, or the like. As illustrated in Fig. 5B, a resist material 32 is applied onto a film 33 deposited on the substrate 1, the mold 31 is pressed against the resist material 32, and ultraviolet light or the like is irradiated, thereby forming, in the resist material 32, a shape obtained by inverting the concavo-convex shape of the mold 31. Thereafter, as illustrated in Fig. 5C, the mold 31 is peeled off, and development is performed so that the concavo-convex shape of the resist material 32 is transferred to the film 33, thereby forming the concavo-convex structure 2 on the substrate 1 of the optical element 100. The method for manufacturing the concavo-convex structure 2 is not limited to nanoimprint lithography, and other methods such as directly forming the concavo-convex structure 2 using electron beams or lasers may also be used. In Figs. 5A, 5B, and 5C, the film 33 and the resist material 32 are in contact with each other; however, a process may be employed in which a layer made of another material is formed therebetween and the concavo-convex structure 2 is finally obtained. As illustrated in Fig. 5B, it is relatively easy to prepare a material having a uniform film thickness such as the film 33. Therefore, when forming the concavo-convex structure 2 of the regions R1 and R2 based on the film 33, the concavo-convex elements 21 of the regions R1 and R2 may be made of the same material.

Fig. 6 is an explanatory diagram of an offset layer 34. As illustrated in Fig. 6, instead of the configuration in which the concavo-convex structure 2 is formed directly on the substrate 1 as illustrated in Fig. 1A, an offset layer 34 disposed so as to extend across both the regions R1 and R2 may be provided. The offset layer 34 may be treated as part of the substrate 1.

Here, a specific configuration of the optical element 100 will be described. The concavo-convex elements 21 in the regions R1 and R2 are respectively disposed in square unit segments 11 each having a side length of 350 nm, and have a height of 1500 nm. The region H1 has a cylindrical structure with a height of 1200 nm, and the region H2 has a height of 300 nm and a structure in which the diameter of the cylinder gradually decreases as the distance from the substrate 1 increases. The diameter at the position farthest from the substrate 1 in the region H2 is 0.20 times the diameter of the region H1. The region R2 has a structure that includes a cylindrical base layer 22 having a height of 200 nm and in contact with the substrate 1, and a cylindrical concavo-convex element 21 having a height of 1300 nm. The effective diameter of the concavo-convex structure 2 is φ4.0 mm, and the concavo-convex structure 2 has 63 annuli in which a phase difference of 2π is periodically repeated at a wavelength of 800 nm. The focal length produced by the concavo-convex structure 2 is 40.0 mm, and the effective Abbe number vdef is -3.452, indicating that the concavo-convex structure 2 has wavelength dispersion equivalent to that of a diffractive optical element. When the position at which the normalized phase is 0.265 is set as the boundary between the regions R1 and R2 within an annulus, the maximum reflectance when light having a wavelength of 800 nm is vertically incident is 0.6% in the region R1 and 1.1% in the region R2. Compared with the maximum reflectance of 3.6% in the comparative example in which cylindrical concavo-convex elements 21 are provided over the entire optical element 101, reflectance can be suppressed.

Next, configurations that may be satisfied by the optical element 100 will be described.

The second structures 216 and the base layer 22 may be made of the same material. Thereby, the manufacturing process can be simple, and manufacturing becomes easier. In a case where the second structures 216 and the base layer 22 are made of different materials, a process for forming the base layer 22 and a process for forming the second structures 216 are separately performed, which increases manufacturing difficulty.

The substrate 1 and the base layer 22 may be made of the same material. Thereby, the optical element 100 can include two materials, namely the second structures 216 and the substrate 1, while obtaining an antireflection effect in the region R2. When the substrate 1 and the base layer 22 are made of different materials, a process for forming the base layer 22 and a process for forming the second structures 216 are separately performed, which increases manufacturing difficulty.

Next, conditions that may be satisfied by the optical element 100 will be described. The optical element 100 may satisfy at least one of inequalities (1) to (16). $0.05 \leq V 2 \leq 0.90$ $0.60 \leq neff 2 / √ ns \leq 1.40$ $0.01 \leq nm 2 / neff 2 < 0.98$ $0.05 \leq Hs / Hm \leq 0.50$ $0.10 \leq V 4 / V 3 \leq 0.95$ $0.60 \leq neff 1 / √ nm 1 \leq 1.40$ $0.80 \leq Hmin / Hmax \leq 1.20$ $0.05 \leq W 1 min / W 1 max \leq 0.95$ $0.05 \leq W 2 min / W 2 max \leq 0.95$ $0.05 \leq E / n \leq 0.90$ $0.10 \leq P / λ 0 \leq 1.20$ $0.05 \leq Hs / λ 0 \leq 0.90$ $0.05 \leq Ha / λ 0 \leq 0.90$ $0.0 \leq Hm / t \leq 0.1$ $0.05 \leq ΔW 1 / P \leq 0.80$ $0.05 \leq ΔW 2 / P \leq 0.80$

Here, V2 is an element filling factor of the base layer 22 in the region R2, from the substrate 1 to a height Hs. ns is a refractive index of the substrate 1. neff2 is an effective refractive index of the base layer 22. nm2 is an effective refractive index of the second structure 216. The effective refractive index of the second structure 216 varies depending on the location, but in inequality (3), it is set to the minimum value of the effective refractive index of the second structure 216. Hs is a height in a direction perpendicular to the radial direction of the base layer 22. Hm is a height in a direction perpendicular to the radial direction of the second structure 216. V3 is an element filling factor of the region H1. The element filling factor of the region H1 varies depending on the location, but in inequality (5), it is set to the maximum value of the element filling factor of the region H1. V4 is an element filling factor of the region H2. The element filling factor of the region H2 varies depending on the location, but in inequality (5), it is set to the maximum value of the element filling factor of the region H1. neff1 is an effective refractive index of the region H2. The effective refractive index of the region H2 varies depending on the location, but in inequality (6), it is set to the minimum value of the effective refractive index of the region H2. nm1 is an effective refractive index of the first structure 215. The effective refractive index of the first structure 215 varies depending on the location, but in inequality (6), it is set to the minimum value of the effective refractive index of the first structure 215. Hmax is a maximum value of the height of the first structure 215 in a direction perpendicular to the radial direction of the optical element 100. Hmin is a minimum value of the height of the second structure 216 in a direction perpendicular to the radial direction of the optical element 100. W1max is a maximum diameter of the first structure 215 in the radial direction. W1min is a minimum diameter of the first structure 215 in the radial direction. W2max is a maximum diameter of the second structure 216 in the radial direction. W2min is a minimum diameter of the second structure 216 in the radial direction. E is a normalized phase at the boundary between the regions R1 and R2 in the same annulus. n is a designed diffraction order. P is a period of the concavo-convex structure 2. λ0 is a reference wavelength used when calculating the normalized phase. Ha is a height of the region H2 in a direction perpendicular to the radial direction. Hm is a height of the concavo-convex elements 21. t is a thickness of the substrate 1 in the optical axis direction. ΔW1 is a difference between the maximum and minimum widths of the concavo-convex structure 2 in the region R1. ΔW2 is a difference between the maximum and minimum widths of the concavo-convex structure 2 in the region R2.

Inequality (1) defines a proper shape of the base layer 22. Properly setting the element filling rate of the base layer 22 can adjust the effective refractive index of the base layer 22. Thereby, it can suppress reflection at the interface with the substrate 1 in the region R2. In a case where the effective refractive index of the base layer 22 becomes too low relatively and V2 becomes lower than the lower limit of inequality (1), the difference between the refractive index of the substrate 1 and the effective refractive index of the base layer 22 becomes large, and it becomes difficult to suppress reflection. In a case where the effective refractive index of the base layer 22 becomes relatively high and V2 becomes higher than the upper limit of inequality (1), the difference with the refractive index of the substrate 1 will be small or will be larger than the refractive index of the substrate 1, and it becomes difficult to suppress reflection.

Inequality (2) defines a proper effective refractive index of the base layer 22. Satisfying inequality (2) can suppress reflection at the interface between the concavo-convex elements 21 and the substrate 1 in the region R2. In a case where the effective refractive index of the base layer 22 becomes too small relative to the refractive index of the substrate 1 and neff2/√ns becomes lower than the lower limit of inequality (2), reflection will increase due to the difference in refractive index between the two. In a case where the effective refractive index of the base layer 22 becomes too large relative to the refractive index of the substrate 1 and neff2/√ns becomes higher than the upper limit of inequality (2), the difference in refractive index between the two will be small or the effective refractive index of the base layer 22 will be higher, and reflection cannot be suppressed.

Inequality (3) relates to the effective refractive index of the base layer 22. Satisfying inequality (3) can suppress reflection at the interface between the concavo-convex elements 21 and the substrate 1 in the region R2. In a case where nm2/neff2 becomes lower than the lower limit of inequality (3), the difference in refractive index between the concavo-convex elements and the base layer becomes too large, and it becomes difficult to suppress reflection at the interface between them. In a case where nm2/neff2 becomes higher than the upper limit of inequality (3), the effective refractive index of the concavo-convex elements becomes relatively large, it becomes difficult to suppress reflection between the concavo-convex elements and the atmosphere.

Inequality (4) defines a proper shape of the concavo-convex elements 21. Satisfying inequality (4) allows the interference effect of the base layer 22 to be fully utilized, resulting in an antireflection effect. In a case where Hs/Hm becomes lower than the lower limit of inequality (4), the height of the base layer 22 becomes too low, and it becomes difficult to reduce reflectance through interference. In a case where Hs/Hm becomes higher than the upper limit of inequality (4), the height of the base layer 22 becomes too high, and it becomes difficult to achieve the reflection suppression effect at the interface between the concavo-convex elements 21 and the substrate 1.

Inequality (5) defines a proper shape of the first structure 215. In a case where the effective refractive index of region H2 becomes relatively too small and V4/V3 becomes lower than the lower limit of inequality (5), it becomes difficult to suppress reflection at the interface between regions H1 and H2. In a case where the effective refractive index of region H2 becomes relatively too large and V4/V3 becomes higher than the upper limit of inequality (5), it becomes difficult to suppress reflection at the boundary between the atmosphere and region H2.

Inequality (6) defines a proper effective refractive index of the first structure 215. In a case where the effective refractive index of the region H2 becomes too small relative to the effective refractive index of the first structure 215 and neff1/√nm1 becomes lower than the lower limit of inequality (6), reflection occurs due to the difference in refractive index between the two. In a case where the effective refractive index of the region H2 becomes too large relative to the effective refractive index of the first structure 215 and neff1/√nm1 becomes higher than the upper limit of inequality (6), the difference in refractive index between the two becomes small, or the effective refractive index of the region H2 becomes higher, and reflection in the region R1 cannot be suppressed.

Inequality (7) defines proper shapes of the first structure 215 and the second structure 216. In a case where the heights of the first structure 215 and the second structure 216 change so that Hmin/Hmax becomes lower than the lower limit or higher than the upper limit of inequality (7), it becomes necessary to form the first structure 215 and the second structure 216 in multiple steps, and it complicates the manufacturing process.

Inequality (8) defines a proper shape of the region R1. In a case where the minimum diameter of the first structure 215 becomes relatively small and W1min/W1max becomes lower than the lower limit of inequality (8), the first structure 215 will be damaged by a slight load, temperature, pressure, or the like, and the antireflection effect of the optical element 100 will not be fully achieved. In a case where W1min/W1max becomes higher than the upper limit of inequality (8), a slight change in the width of the concavo-convex elements 21 will cause relatively large phase modulation, which will increase the impact of manufacturing variations when forming the concavo-convex structure 2, and manufacturing becomes difficult.

Inequality (9) defines a proper shape of the region R2. In a case where the minimum diameter of the second structure 216 becomes relatively small and W2min/W2max becomes lower than the lower limit of inequality (9), the first structure 215 will be destroyed by a slight load, temperature, or pressure, and the antireflection effect of the optical element 100 will not be fully achieved. In a case where W2min/W2max becomes higher than the upper limit of inequality (9), a slight change in the width of the concavo-convex elements 21 will cause a relatively large phase modulation, and the impact of manufacturing variations when forming the concavo-convex structure 2 will be significant, and manufacturing becomes difficult.

Inequality (10) defines a proper arrangement of the regions R1 and R2. In a case where a phase modulation amount in the region R1 becomes relatively large and E/n becomes lower than the lower limit of inequality (10), the proportion of the region R2 to the entire area of the optical element 100 will become smaller, and the reflection/diffraction suppression effect of the concavo-convex structure 2 will not be fully achieved. In a case where the phase modulation amount in the region R2 becomes relatively large and E/n becomes higher than the upper limit of inequality (10), the width of the second structure needs to be changed significantly, which increases the aspect ratio of the second structure 216 and the structure becomes more susceptible to collapse due to external factors.

Inequality (11) defines a proper configuration of the second structure 216. In a case where the pitch of the second structure 216 becomes relatively smaller and P/λ0 becomes lower than the lower limit of inequality (11), the aspect ratio becomes large and fabrication becomes difficult. In a case where the pitch of the second structure 216 becomes relatively larger and P/λ0 becomes higher than the upper limit of inequality (11), the pitch cannot be made sufficiently small relative to the wavelength of the incident light, and the effect of suppressing reflective diffraction by the concavo-convex element 21 cannot be obtained.

Inequality (12) defines a proper shape of the concavo-convex element 21. In a case where the height of the base layer 22 becomes relatively lower and Hs/λ0 becomes lower than the lower limit of inequality (12), it becomes difficult to reduce reflectance due to interference. In a case where the height of the base layer 22 becomes relatively higher and Hs/λ0 becomes higher than the upper limit of inequality (12), it becomes difficult to obtain the effect of suppressing reflection at the interface between the concavo-convex element 21 and the substrate 1.

Inequality (13) defines a proper shape of the concavo-convex element 21. In a case where the effective refractive index of the region H2 becomes relatively smaller and Ha/λ0 becomes lower than the lower limit of inequality (13), it becomes difficult to suppress reflection at the interface between the regions H1 and H2. In a case where the effective refractive index of the region H2 becomes relatively larger and Ha/λ0 becomes higher than the upper limit of inequality (13), it becomes difficult to suppress reflection at the boundary between the ambient environment and the region H2.

Inequality (14) defines a proper shape of the optical element 100. Both the height Hm of the concavo-convex element 21 and the thickness t of the substrate 1 are numerical values representing length and are greater than zero. Therefore, Hm/t does not become lower than the lower limit of inequality (14). In a case where the thickness of the substrate 1 becomes relatively thinner and Hm/t becomes higher than the upper limit of inequality (14), deformation due to the weight of the substrate cannot be suppressed when the substrate is held by a holding member, or deformation of the substrate 1 may occur during fabrication using lithography.

Inequality (15) defines a proper shape of the concavo-convex structure 2. In a case where the phase modulation amount in the region R2 becomes relatively larger and ΔW1/P becomes lower than the lower limit of inequality (15), it becomes necessary to significantly vary the width of the concavo-convex structure 2, resulting in a large aspect ratio and impaired robustness. In a case where the phase modulation amount in the region R1 becomes relatively larger and ΔW1/P becomes higher than the upper limit of inequality (15), the proportion of the region R2 relative to the entire optical element 100 becomes small, and it becomes difficult to sufficiently suppress reflective diffraction.

Inequality (16) defines a proper shape of the concavo-convex structure. In a case where the phase modulation amount in the region R1 becomes relatively larger and ΔW2/P becomes lower than the lower limit of inequality (16), the proportion of the region R2 relative to the entire optical element 100 becomes small, and it becomes difficult to sufficiently suppress reflective diffraction. In a case where the phase modulation amount in the region R2 becomes relatively larger and ΔW2/P becomes higher than the upper limit of inequality (16), it becomes necessary to significantly vary the width of the concavo-convex structure 2, resulting in a large aspect ratio and impaired robustness.

The lower limit of inequality (1) may be set to 0.08, 0.10, 0.12, 0.14, 0.16, 0.18, 0.20, 0.22, or 0.24. The upper limit of inequality (1) may be set to 0.85, 0.80, 0.75, 0.70, 0.66, 0.62, 0.60, 0.59, or 0.58.

The lower limit of inequality (2) may be set to 0.64, 0.68, 0.72, 0.76, 0.80, 0.84, 0.88, 0.92, or 0.96. The upper limit of inequality (2) may be set to 1.38, 1.32, 1.28, 1.24, 1.18, 1.14, 1.10, or 1.06.

The lower limit of inequality (3) may be set to 0.05, 0.10, 0.15, 0.20, 0.25, 0.30, 0.35, 0.40, 0.45, 0.50, 0.55, 0.60, 0.65, 0.70, or 0.75. The upper limit of inequality (3) may be set to 0.94, 0.90, 0.88, 0.86, or 0.84.

The lower limit of inequality (4) may be set to 0.06, 0.07, 0.08, 0.09, 0.10, 0.11, 0.12, or 0.13. The upper limit of inequality (4) may be set to 0.46, 0.42, 0.38, 0.34, 0.30, 0.28, 0.26, 0.24, 0.22, 0.20, 0.18, or 0.16.

The lower limit of inequality (5) may be set to 0.15, 0.20, 0.25, 0.30, 0.35, or 0.40. The upper limit of inequality (5) may be set to 0.90, 0.85, 0.80, 0.75, 0.70, 0.65, 0.60, 0.50, or 0.45.

The lower limit of inequality (6) may be set to 0.64, 0.68, 0.72, 0.76, 0.80, 0.84, 0.88, 0.92, 0.94, or 0.96. The upper limit of inequality (6) may be set to 1.36, 1.32, 1.28, 1.24, 1.18, 1.14, 1.10, or 1.06.

The lower limit of inequality (7) may be set to 0.84, 0.88, 0.90, 0.92, 0.94, 0.96, or 0.98. The upper limit of inequality (7) may be set to 1.16, 1.12, 1.10, 1.08, 1.06, or 1.04.

The lower limit of inequality (8) may be set to 0.10, 0.15, 0.20, 0.25, 0.30, 0.35, 0.40, 0.45, or 0.50. The upper limit of inequality (8) may be set to 0.90, 0.85, 0.80, 0.75, 0.70, or 0.65.

The lower limit of inequality (9) may be set to 0.08, 0.10, 0.12, 0.14, 0.15, 0.16, 0.17, or 0.18. The upper limit of inequality (9) may be set to 0.90, 0.85, 0.80, 0.75, 0.70, 0.65, 0.62, or 0.60.

The lower limit of inequality (10) may be set to 0.06, 0.08, 0.10, 0.12, 0.14, 0.16, 0.18, or 0.20. The upper limit of inequality (10) may be set to 0.80, 0.70, 0.60, 0.50, 0.45, 0.40, 0.36, 0.32, 0.30, or 0.28.

The lower limit of inequality (11) may be set to 0.12, 0.14, 0.16, 0.18, 0.20, 0.22, 0.24, 0.26, 0.28, 0.30, or 0.32. The upper limit of inequality (11) may be set to 1.10, 1.00, 0.90, 0.80, 0.70, 0.60, 0.55, 0.50, or 0.45.

The lower limit of inequality (12) may be set to 0.10, 0.12, 0.14, 0.16, 0.18, or 0.20. The upper limit of inequality (12) may be set to 0.88, 0.86, 0.84, 0.82, 0.80, 0.78, or 0.76.

The lower limit of inequality (13) may be set to 0.08, 0.10, 0.12, 0.14, 0.16, 0.18, 0.20, 0.22, 0.24, 0.26, 0.28, or 0.30. The upper limit of inequality (13) may be set to 0.88, 0.86, 0.84, 0.82, 0.80, 0.79, 0.78, 0.77, or 0.76.

The lower limit of inequality (14) may be set to 0.0001, 0.0004, 0.0008, or 0.001. The upper limit of inequality (14) may be set to 0.05, 0.01, 0.008, 0.005, or 0.002.

The lower limit of inequality (15) may be set to 0.06, 0.07, 0.08, 0.09, 0.10, 0.14, 0.18, or 0.20. The upper limit of inequality (15) may be set to 0.70, 0.65, 0.60, 0.55, or 0.50.

The lower limit of inequality (16) may be set to 0.06, 0.08, 0.10, 0.12, 0.14, 0.16, 0.18, 0.20, 0.22, or 0.24. The upper limit of inequality (16) may be set to 0.70, 0.65, 0.60, 0.55, or 0.50.

### EXAMPLE 2

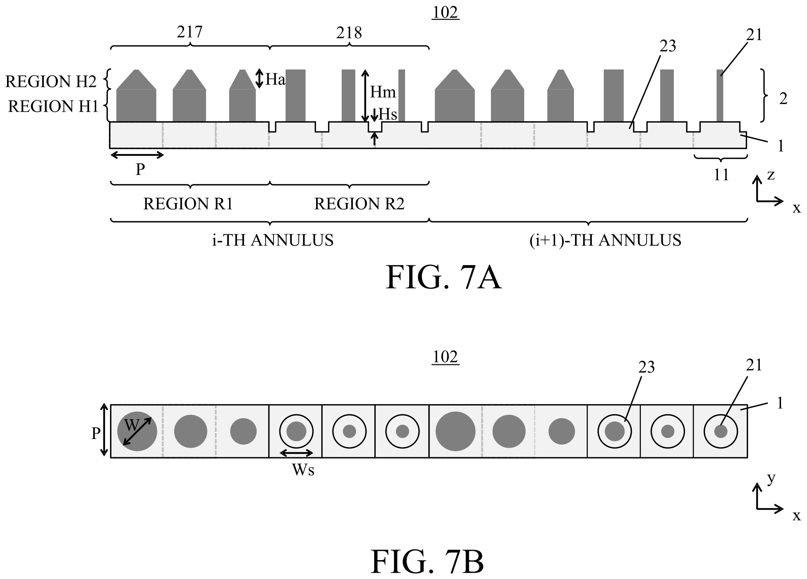

Figs. 7A and 7B are structural diagrams of an optical element 102 according to the present example. Fig. 7A is an enlarged sectional view of the optical element 102 when viewed from the y-axis direction (in the xz plane). Fig. 7B is an enlarged top view of the optical element 102 when viewed from the z-axis direction (optical axis direction) (in the xy plane).

The optical element 102 includes a substrate 1 and an concavo-convex structure (pillars) 2 formed on the substrate 1. In this example, the substrate 1 is a transparent flat plate made of synthetic quartz having a thickness of 0.775 mm. The concavo-convex structure 2 includes a plurality of concavo-convex elements 21 including at least one of concave elements and convex elements periodically arranged in the radial direction of the substrate 1 (optical element 102) (for example, the x-axis direction and the y-axis direction), and a recessed portion 23 having a height Hs and a width Ws in the thickness direction of the substrate 1 (z-axis direction). In this example, the concavo-convex elements 21 are convex cylindrical elements made of a dielectric material, Si₃N₄. Since the recessed portion 23 functions similarly to the base layer 22 in Example 1, it may be regarded as a base layer.

The concavo-convex elements 21 include a plurality of first structures 217 arranged in the region R1 and a plurality of second structures 218 arranged in the region R2. In the region R2, the plurality of second structures 218 are formed on the recessed portion 23 of the substrate 1. The plurality of first structures 217 include the region H2 in which the radial width gradually decreases in the direction opposite to the substrate 1 in the z-axis direction. The plurality of first structures 217 have mutually different radial widths. Similarly, the plurality of second structures 218 have mutually different radial widths.

The region R1 of the optical element 102 uses a structure similar to that of the optical element 100, and has an antireflection effect. In the region R2, where the diameters of the cylindrical elements are relatively small, the effective refractive index of the concavo-convex elements 21 is low, and the difference in effective refractive index at the interface with the substrate 1 becomes large, so that reflection tends to increase. Therefore, in the region R2, the recessed portion 23 is provided between the concavo-convex elements 21 and the substrate 1, and by adjusting the height Hs and width Ws of the recessed portion, the effective refractive index can be properly set, thereby obtaining an antireflection effect between the concavo-convex elements 21 and the substrate 1.

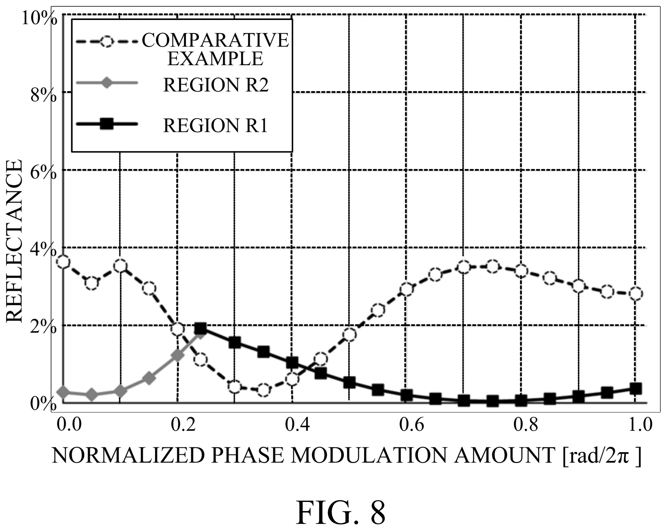

The specific structure of the optical element 102 will be described below. The concavo-convex elements 21 in the regions R1 and R2 are each arranged in square unit segments 11 having a side length of 350 nm, and have a height of 1500 nm. The region H1 has a cylindrical structure with a height of 900 nm. The region H2 has a height of 600 nm and a structure in which the diameter of the cylinder decreases with increasing distance from the substrate 1, and the diameter at the position farthest from the substrate 1 is 0.20 times the diameter of the region H1. The region H2 includes a cylindrical recessed portion 23 having a height of 200 nm and a cylindrical concavo-convex element 21 having a height of 1500 nm. The effective diameter of the concavo-convex structure 2 is φ2.0 mm, and the concavo-convex structure 2 has 11 annuli in which a phase difference of 2π is periodically repeated at a wavelength of 800 nm. The focal length produced by the concavo-convex structure 2 is 60.0 mm, and the effective Abbe number vdef is -3.452, exhibiting wavelength dispersion equivalent to that of a diffractive optical element. A position at which the normalized phase is 0.240 is defined as the boundary between regions R1 and R2 within an annulus. Fig. 8 illustrates a relationship between the normalized phase modulation amount and reflectance of the concavo-convex elements 21 in this example and a comparative example. The maximum reflectance when light having a wavelength of 800 nm is vertically incident in the regions R1 and R2 is 1.6% and 1.8%, respectively, and reflectance is suppressed compared with a comparative example in which cylindrical concavo-convex elements are used over the entire optical element and the maximum reflectance is 3.6%.

### EXAMPLE 3

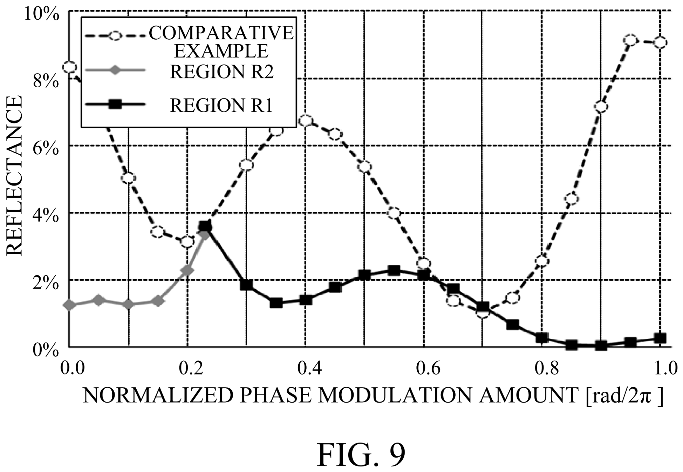

The optical element according to this example includes a high-refractive-index substrate 1 having a refractive index higher than that of synthetic quartz with a thickness of 0.775 mm, and an concavo-convex structure 2 including concavo-convex elements 21 formed of convex cylindrical elements made of a dielectric material, Si₃N₄. The concavo-convex elements 21 in the regions R1 and R2 are each arranged in square unit segments 11 having a side length of 320 nm, and have a height of 1500 nm. The region H1 has a cylindrical structure with a height of 1200 nm. The region H2 has a height of 300 nm and a structure in which the diameter of the cylinder decreases with increasing distance from the substrate 1, and the diameter at the position farthest from the substrate 1 is 0.20 times the diameter of the region H1. The region R2 includes a cylindrical base layer 22 having a height of 200 nm and contacting the substrate 1, and a cylindrical concavo-convex element 21 having a height of 1300 nm. The effective diameter of the concavo-convex structure 2 is φ4.0 mm, and the concavo-convex structure 2 has 63 annuli in which a phase difference of 2π is periodically repeated at a wavelength of 800 nm. The focal length produced by the concavo-convex structure 2 is 40.0 mm, and the effective Abbe number vdef is -3.452, exhibiting wavelength dispersion equivalent to that of a diffractive optical element. A position at which the normalized phase is 0.230 is defined as the boundary between regions R1 and R2 within an annulus. Fig. 9 illustrates a relationship between the normalized phase modulation amount and reflectance of the concavo-convex elements 21 in this example and a comparative example. The maximum reflectance when light having a wavelength of 950 nm is vertically incident in the regions R1 and R2 is 3.6% and 3.3%, respectively, and reflectance is suppressed compared with a comparative example in which cylindrical concavo-convex elements are used over the entire optical element and the maximum reflectance is 9.1%.

### EXAMPLE 4

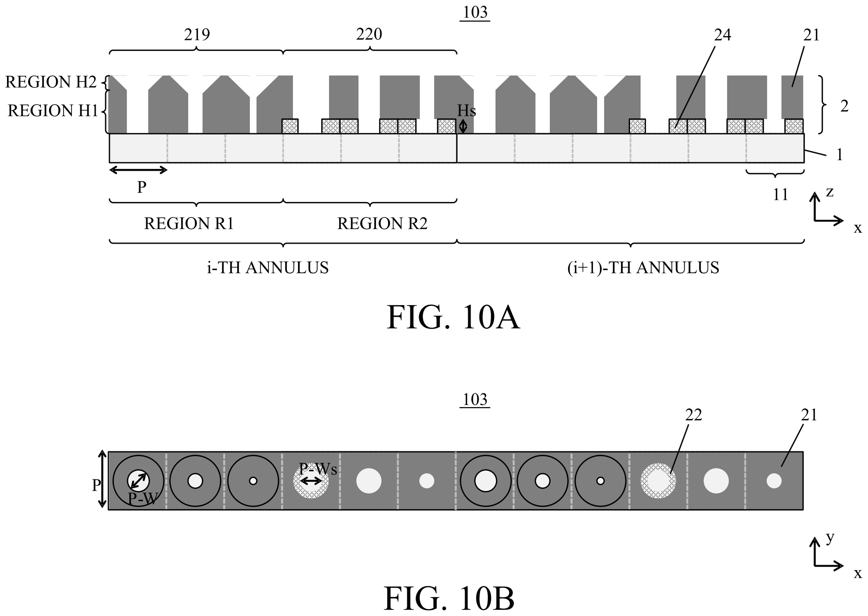

Figs. 10A and 10B are structural diagrams of an optical element 103 according to the present example. Fig. 10A is an enlarged sectional view of the optical element 103 when viewed from the y-axis direction (in the xz plane). Fig. 10B is an enlarged top view of the optical element 103 when viewed from the z-axis direction (optical axis direction) (in the xy plane).

The optical element 103 includes a substrate 1 and an concavo-convex structure (pillars) 2 formed on the substrate 1. In this example, the substrate 1 is a transparent flat plate made of synthetic quartz having a thickness of 0.775 mm. The concavo-convex structure 2 includes a plurality of concavo-convex elements 21 including at least one of concave elements and convex elements periodically arranged in the radial direction of the substrate 1 (optical element 103) (for example, the x-axis direction and the y-axis direction), and a base layer 24 having a substantially constant thickness in the thickness direction of the substrate 1 (z-axis direction). In this example, the concavo-convex elements 21 are concave cylindrical elements made of a dielectric material, Si₃N₄.

The concavo-convex elements 21 include a plurality of first structures 219 arranged in the region R1 and a plurality of second structures 220 arranged in the region R2. In the region R2, the plurality of second structures 220 are formed on the substrate 1 via the base layer 24. The plurality of first structures 219 include the region H2 in which the radial width gradually decreases in the direction opposite to the substrate 1 in the z-axis direction. The plurality of first structures 219 have mutually different radial widths. Similarly, the plurality of second structures 220 have mutually different radial widths.

In the region R1, the region H1 has a structure including cylindrical recesses, and the region H2 has a structure in which the diameter of the cylindrical recesses increases with increasing distance from the substrate 1. By gradually reducing the effective refractive index, an antireflection effect is obtained. In the region R2, the base layer 24 having cylindrical recesses is provided between the concavo-convex elements 21 and the substrate 1, and by adjusting the height Hs and width Ws of the base layer 24, the effective refractive index can be properly set, thereby obtaining an antireflection effect between the concavo-convex elements 21 and the substrate 1.

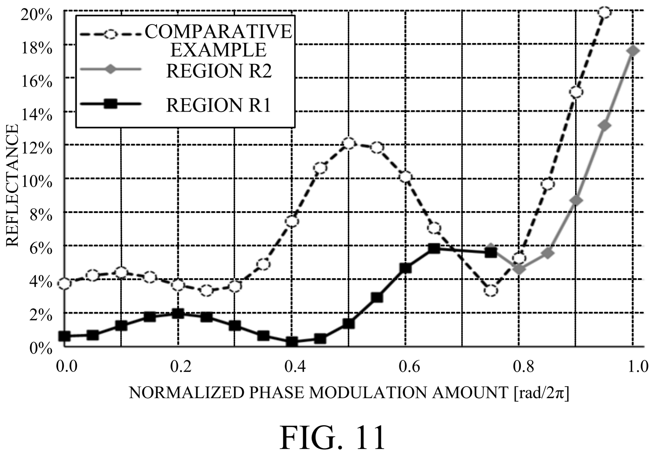

The specific structure of the optical element 103 will be described below. The concavo-convex elements 21 in the regions R1 and R2 are arranged in each square unit segment 11 having a side length of 350 nm, and have a height of 1500 nm. The region H1 has a concave cylindrical structure with a height of 900 nm. The region H2 has a height of 600 nm and a structure in which the diameter of the concave cylindrical shape decreases with increasing distance from the substrate 1, and the diameter at the position farthest from the substrate 1 is 0.10 times the diameter of the region H1. The region R2 includes a base layer 24 formed of concave cylindrical elements having a height of 200 nm, and concave cylindrical concavo-convex elements 21 having a height of 1300 nm. The effective diameter of the concavo-convex structure 2 is φ1.0 mm, and the concavo-convex structure 2 has 16 annuli in which a phase difference of 2π is periodically repeated at a wavelength of 800 nm. The focal length produced by the concavo-convex structure 2 is 10.0 mm, and the effective Abbe number vdef is -3.452, exhibiting wavelength dispersion equivalent to that of a diffractive optical element. A position at which the normalized phase is 0.750 is defined as the boundary between regions R1 and R2 within an annulus. Fig. 11 illustrates a relationship between the normalized phase modulation amount and reflectance of the concavo-convex elements 21 in this example and a comparative example. The maximum reflectance when light having a wavelength of 800 nm is vertically incident in the regions R1 and R2 is 5.8% and 17.6%, respectively, and reflectance is suppressed compared with a comparative example in which cylindrical concavo-convex elements are used over the entire optical element and the maximum reflectance is 22.0%.

### MODIFICATION

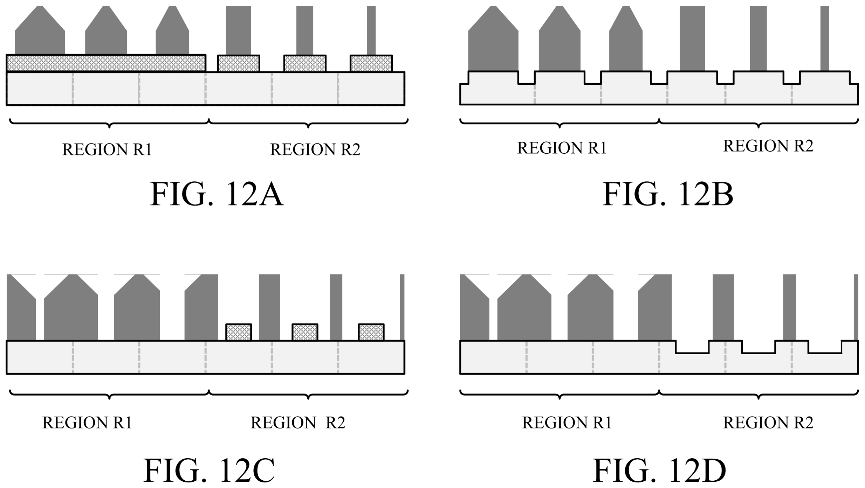

Figs. 12A, 12B, 12C, and 12D are explanatory diagrams of the concavo-convex elements according to the present modification. In Fig. 12A, in addition to the structure according to Example 1, an offset layer made of the same material as the base layer 22 of the region R2 is provided between the substrate 1 and the concavo-convex elements 21 in the region R1. The offset layer may suppress the reflectance at the interface between the substrate 1 and the concavo-convex elements 21. In Fig. 12B, in addition to the structure according to Example 2, a recessed portion 23 is provided in the region R1. This may suppress the reflectance at the interface between the substrate 1 and the concavo-convex elements 21. In Fig. 12C, the structure of the base layer 24 in the region R2 in the structure according to Example 4 is different. In the region R2 of Fig. 12C, the base layer 24 is arranged at the central portion of the unit segment 11 so as not to contact the concave elements. This may suppress the reflectance at the interface between the substrate 1 and the concave elements. Fig. 12D omits the base layer in the region R2 in the structure according to Example 4, and instead provides a recessed portion at the central portion of the unit segment 11. This may suppress the reflectance at the interface between the substrate 1 and the concave elements.

Numerical Examples 1 to 4 corresponding to the optical elements of Examples 1 to 4, respectively, will be illustrated below.

The phase φ indicating the light-condensing and light-diverging action produced by the concavo-convex structure 2 is expressed by the following equation: $φ \left(h\right) = \left(2π\frac{n}{{λ}_{0}}\right) {\sum }_{k} {C}_{2 k} {h}^{2 k}$ where h is a height from the optical axis in a direction perpendicular to the optical axis (radial direction), n is a diffraction order of diffracted light, λ₀ is a reference wavelength, and Cₖ (k = 1, 2, 3, ...) are phase coefficients of each order.

Let nd, ng, nC, nF, and nλ denote refractive indices for the d-line (587.6 nm), g-line (435.8 nm), F-line (486.1 nm), C-line (656.3 nm), and wavelength λ, respectively. Let W1 [nm] and W2 [nm] be widths of the concavo-convex elements 21 in the regions R1 and R2, respectively, and Wref [nm] is a width of the concavo-convex elements of the comparative example. R1, R2, and Rref are reflectances corresponding to the shapes of the respective concavo-convex elements, respectively.

### NUMERICAL EXAMPLE 1

| Normalized Phase | W2 | W1 | Wref1 | R2 | R1 | Rref |
|---|---|---|---|---|---|---|
| 0.000 | 105.0 | | 58.8 | 0.4% | | 3.6% |
| 0.050 | 128.7 | | 95.4 | 0.1% | | 3.1% |
| 0.100 | 147.2 | | 119.4 | 0.0% | | 3.5% |
| 0.150 | 162.8 | | 137.4 | 0.1% | | 2.9% |
| 0.200 | 176.6 | | 152.3 | 0.3% | | 1.9% |
| 0.265 | 192.5 | 210.4 | 169.2 | 0.6% | 1.0% | 0.7% |
| 0.300 | | 217.4 | 177.4 | | 0.8% | 0.4% |
| 0.350 | | 226.8 | 188.2 | | 0.5% | 0.3% |
| 0.400 | | 235.9 | 198.0 | | 0.2% | 0.6% |
| 0.450 | | 244.6 | 207.1 | | 0.1% | 1.1% |
| 0.500 | 253.1 | 215.8 | 0.0% | 1.8% | | |
| 0.550 | 261.4 | 224.2 | 0.0% | 2.4% | | |
| 0.600 | 269.6 | 232.3 | 0.0% | 2.9% | | |
| 0.650 | 277.6 | 240.3 | 0.1% | 3.3% | | |
| 0.700 | 285.6 | 248.1 | 0.1% | 3.5% | | |
| 0.750 | 293.5 | 255.5 | 0.3% | 3.5% | | |
| 0.800 | 301.3 | 262.6 | 0.5% | 3.4% | | |
| 0.850 | 309.0 | 269.7 | 0.7% | 3.2% | | |
| 0.900 | 316.5 | 277.1 | 0.9% | 3.0% | | |
| 0.950 | 323.6 | 284.6 | 1.1% | 2.9% | | |
| 1.000 | 330.4 | 291.2 | 1.0% | 2.8% | | |

### NUMERICAL EXAMPLE 2

| Normalized Phase | W2 | W1 | Wref1 | R2 | R1 | Rref |
|---|---|---|---|---|---|---|
| 0.000 | 35.2 | | 58.8 | 0.3% | | 3.6% |
| 0.050 | 84.0 | | 95.4 | 0.2% | | 3.1% |
| 0.100 | 111.1 | | 119.4 | 0.3% | | 3.5% |
| 0.150 | 131.2 | | 137.4 | 0.6% | | 2.9% |
| 0.200 | 147.4 | | 152.3 | 1.2% | | 1.9% |
| 0.240 | 158.2 | 138.9 | 163.0 | 1.8% | 1.9% | 1.1% |
| 0.300 | | 161.9 | 177.4 | | 1.6% | 0.4% |
| 0.350 | | 178.0 | 188.2 | | 1.3% | 0.3% |
| 0.400 | | 192.1 | 198.0 | | 1.0% | 0.6% |
| 0.450 | | 204.9 | 207.1 | | 0.8% | 1.1% |
| 0.500 | | 216.7 | 215.8 | | 0.5% | 1.8% |
| 0.550 | | 227.8 | 224.2 | | 0.3% | 2.4% |
| 0.600 | | 238.3 | 232.3 | | 0.2% | 2.9% |
| 0.650 | | 248.3 | 240.3 | | 0.1% | 3.3% |
| 0.700 | 258.1 | 248.1 | 0.1% | 3.5% | | |
| 0.750 | 267.6 | 255.5 | 0.0% | 3.5% | | |
| 0.800 | 276.9 | 262.6 | 0.1% | 3.4% | | |
| 0.850 | 286.1 | 269.7 | 0.1% | 3.2% | | |
| 0.900 | 295.2 | 277.1 | 0.2% | 3.0% | | |
| 0.950 | 304.1 | 284.6 | 0.3% | 2.9% | | |
| 1.000 | 312.8 | 291.2 | 0.4% | 2.8% | | |

### NUMERICAL EXAMPLE 3

| Normalized Phase | W2 | W1 | Wref1 | R2 | R1 | Rref |
|---|---|---|---|---|---|---|
| 0.000 | 25.4 | | 22.7 | 1.2% | | 8.3% |
| 0.050 | 90.1 | | 82.2 | 1.4% | | 7.2% |
| 0.100 | 119.1 | | 111.8 | 1.3% | | 5.0% |
| 0.150 | 141.0 | | 131.2 | 1.4% | | 3.4% |
| 0.200 | 159.6 | | 147.8 | 2.3% | | 3.1% |
| 0.230 | 169.5 | 182.4 | 157.4 | 3.3% | 3.6% | 3.5% |
| 0.300 | | 200.6 | 178.2 | | 1.8% | 5.4% |
| 0.350 | | 212.4 | 190.9 | | 1.3% | 6.4% |
| 0.400 | | 223.3 | 201.9 | | 1.4% | 6.7% |
| 0.450 | | 233.6 | 211.6 | | 1.8% | 6.3% |
| 0.500 | | 243.3 | 220.9 | | 2.1% | 5.4% |
| 0.550 | | 252.7 | 230.1 | | 2.3% | 4.0% |
| 0.600 | | 261.6 | 239.4 | | 2.1% | 2.5% |
| 0.650 | | 270.2 | 248.3 | | 1.7% | 1.4% |
| 0.700 | | 278.4 | 256.4 | | 1.2% | 1.0% |
| 0.750 | | 286.2 | 263.4 | | 0.7% | 1.5% |
| 0.800 | | 293.5 | 269.8 | | 0.3% | 2.5% |
| 0.850 | | 300.3 | 276.7 | | 0.1% | 4.4% |
| 0.900 | 306.6 | 285.2 | 0.0% | 7.1% | | |
| 0.950 | 312.4 | 294.4 | 0.1% | 9.1% | | |
| 1.000 | 317.6 | 297.3 | 0.3% | 9.0% | | |

### NUMERICAL EXAMPLE 4

| Normalized Phase | W2 | W1 | Wref1 | R2 | R1 | Rref |
|---|---|---|---|---|---|---|
| 0.000 | | 38.6 | 47.5 | | 0.6% | 3.7% |
| 0.050 | | 45.1 | 52.8 | | 0.7% | 4.2% |
| 0.100 | | 51.8 | 59.1 | | 1.2% | 4.4% |
| 0.150 | | 58.8 | 65.6 | | 1.8% | 4.1% |
| 0.200 | | 66.2 | 72.1 | | 2.0% | 3.7% |
| 0.250 | | 73.9 | 78.9 | | 1.8% | 3.3% |
| 0.300 | | 82.0 | 86.2 | | 1.2% | 3.6% |
| 0.350 | | 90.6 | 94.1 | | 0.6% | 4.9% |
| 0.400 | | 99.7 | 102.5 | | 0.3% | 7.4% |
| 0.450 | | 109.4 | 111.5 | | 0.5% | 10.6% |
| 0.500 | | 119.8 | 121.2 | | 1.4% | 12.1% |
| 0.550 | | 131.1 | 131.5 | | 2.9% | 11.8% |
| 0.600 | | 143.3 | 142.8 | | 4.7% | 10.1% |
| 0.650 | | 156.7 | 155.0 | | 5.8% | 7.1% |
| 0.700 | | 171.5 | 168.3 | | 5.7% | 4.2% |
| 0.750 | 165.7 | 187.8 | 182.6 | 5.8% | 5.6% | 3.3% |
| 0.800 | 182.1 | | 198.3 | 4.6% | | 5.3% |
| 0.850 | 200.3 | | 215.7 | 5.6% | | 9.7% |
| 0.900 | 221.1 | | 236.2 | 8.7% | | 15.1% |
| 0.950 | 246.1 | | 263.1 | 13.2% | | 19.9% |
| 1.000 | 280.0 | | 302.5 | 17.6% | | 22.0% |

TABLES 1 and 2 summarize various values in each example.

**TABLE 1**

| | Si₃N₄ | Synthetic Quartz | High-Refractive Index Substrate |
|---|---|---|---|
| ng | 2.08394 | 1.46240 | 1.83519 |
| nF | 2.06710 | 1.45876 | 1.81905 |
| nd | 2.04580 | 1.45345 | 1.79999 |
| nC | 2.03665 | 1.45084 | 1.79223 |
| n800 | 2.02416 | 1.44691 | 1.78211 |
| n950 | 2.01591 | 1.44413 | 1.77581 |

**TABLE 2**

| | Example 1 | Example 2 | Example 3 | Example 4 |
|---|---|---|---|---|
| λ0 [mm] | 0.000800 | 0.000800 | 0.000800 | 0.000800 |
| C2 | -1.250000E-02 | -8.333333E-03 | -1.250000E-02 | -5.000000E-02 |
| C4 | 0.000000E+00 | 0.000000E+00 | 0.000000E+00 | 0.000000E+00 |
| C6 | 0.000000E+00 | 0.000000E+00 | 0.000000E+00 | 0.000000E+00 |
| C8 | 0.000000E+00 | 0.000000E+00 | 0.000000E+00 | 0.000000E+00 |
| C10 | 0.000000E+00 | 0.000000E+00 | 0.000000E+00 | 0.000000E+00 |
| C12 | 0.000000E+00 | 0.000000E+00 | 0.000000E+00 | 0.000000E+00 |

### OPTICAL SYSTEM

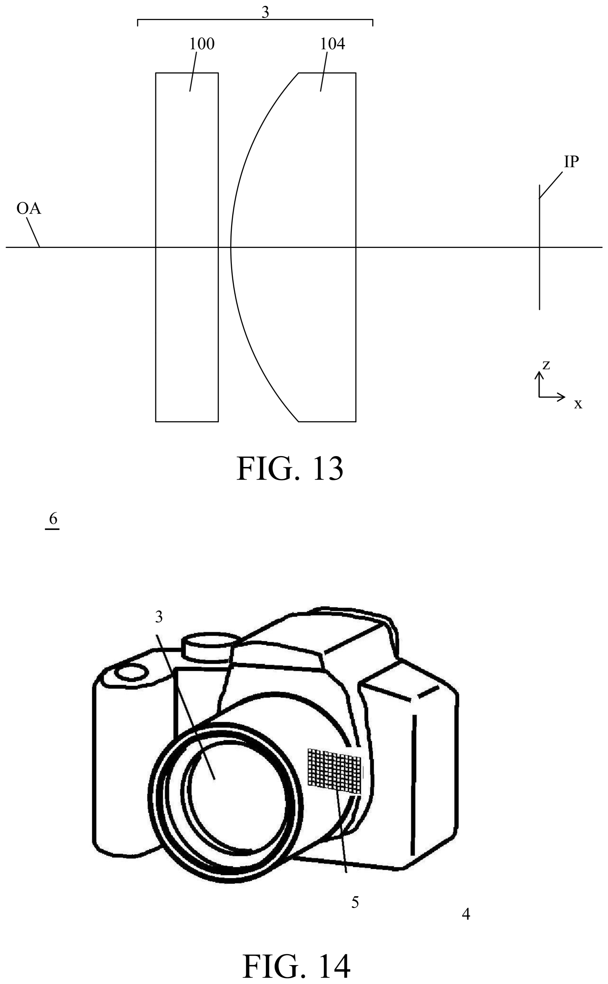

Next, an example of an optical system including the optical element according to each example will be described with reference to Fig. 13. In Fig. 13, reference numeral 100 denotes an optical element according to any one of the above examples, reference numeral 104 denotes a lens element, OA denotes an optical axis, IP denotes an image plane, and reference numeral 3 denotes an optical system including the optical element according to each example. The lens element may include a refractive lens, a diffractive optical element, a mirror, or the like, and may be one or more elements. The optical element 100 and the lens element 104 are arranged along the optical axis OA to form an image of incident light on the image plane IP. Arranging concavo-convex elements on the image-side surface of the optical element 100 can provide a light condensing or diverging function.

### IMAGE PICKUP APPARATUS

Referring now to Fig. 14, a description will be given of a digital still camera (image pickup apparatus) using, as an imaging optical system, an optical system including the optical element according any one of the above examples. Fig. 14 is an explanatory diagram of an image pickup apparatus 6 including an optical system having the optical element according to any one of the above examples. In Fig. 14, reference numeral 4 denotes a camera body, and reference numeral 3 denotes an optical system including the optical element according to any one of the above examples. Reference numeral 5 denotes an image sensor (photoelectric conversion element), such as a CCD sensor or a CMOS sensor, which is built into the camera body 4 and receives an optical image formed by the optical system 3 to perform photoelectric conversion. The camera body 4 may be a so-called single-lens reflex camera having a quick return mirror, or may be a so-called mirrorless camera not having a quick return mirror. Thus, applying the optical system including the optical element according to any one of the above examples to an image pickup apparatus such as a digital still camera can provide an image pickup apparatus having a compact lens.

The optical element according to any one of the above examples may also be used in an image sensor having a photoelectric converter that converts light from the optical element into electric charge.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

Each example can provide an optical element that can suppress the reflectance for incident light with a simple configuration.

## Claims

1. An optical element (100) comprising:
a substrate (1); and
a concavo-convex structure (2) formed on the substrate,
**characterized in that** the concavo-convex structure has a plurality of structures (21) that are periodically arranged and include at least one of a concave element and a convex element,
wherein a plurality of annuli arranged along a radial direction of the substrate are formed on the substrate,
wherein each of the plurality of annuli includes, along the radial direction, a first region (R1) and a second region (R2) having a phase smaller than that of the first region,
wherein the plurality of structures include a plurality of first structures disposed in the first region and a plurality of second structures disposed in the second region, and
wherein a base layer (22) is provided between the substrate and at least one of the plurality of second structures.

2. The optical element according to claim 1, **characterized in that** the following inequality is satisfied: $0.05 \leq V 2 \leq 0.90$ where V2 is an element filling factor of the base layer.

3. The optical element according to claim 1 or 2, **characterized in that** the following inequalities are satisfied: $0.60 \leq neff 2 / √ ns \leq 1.40$ $0.01 \leq nm 2 / neff 2 < 0.98$ where ns is a refractive index of the substrate, neff2 is an effective refractive index of the base layer, and nm2 is an effective refractive index of the second structures.

4. The optical element according to any one of claims 1 to 3, **characterized in that** the following inequality is satisfied: $0.05 \leq Hs / Hm \leq 0.50$ where Hs is a height of the base layer in a direction perpendicular to the radial direction, and Hm is a height of the second structures in the direction perpendicular to the radial direction.

5. The optical element according to any one of claims 1 to 4, **characterized in that** the second structures and the base layer are made of a same material.

6. The optical element according to any one of claims 1 to 5, **characterized in that** the substrate and the base layer are made of a same material.

7. The optical element according to any one of claims 1 to 6, **characterized in that** the first structures include, in order from a substrate side, a third region and a fourth region in a direction perpendicular to the radial direction,
wherein the following inequality is satisfied: $0.10 \leq V 4 / V 3 \leq 0.95$ where V3 is an element filling factor of the third region, and V4 is an element filling factor of the fourth region.

8. The optical element according to any one of claims 1 to 7, **characterized in that** the first structures include, in order from a substrate side, a third region and a fourth region having an element filling factor lower than that of the third region, in a direction perpendicular to the radial direction,
wherein the following inequality is satisfied: $0.60 \leq neff 1 / √ nm 1 \leq 1.40$ where neff1 is an effective refractive index of the fourth region, and nm1 is an effective refractive index of the first structures.

9. The optical element according to any one of claims 1 to 8, **characterized in that** the following inequality is satisfied: $0.80 \leq Hmin / Hmax \leq 1.20$ where Hmax is a maximum height of the first structures in a direction perpendicular to the radial direction, and Hmin is a minimum height of the second structures in the direction perpendicular to the radial direction.

10. The optical element according to any one of claims 1 to 9, **characterized in that** the following inequalities are satisfied: $0.05 \leq W 1 min / W 1 max \leq 0.95$ $0.05 \leq W 2 min / W 2 max \leq 0.95$ where W1max is a maximum diameter of the first structures in the radial direction, W1min is a minimum diameter of the first structures in the radial direction, W2max is a maximum diameter of the second structures in the radial direction, and W2min is a minimum diameter of the second structures in the radial direction.

11. The optical element according to any one of claims 1 to 10, **characterized in that** the following inequality is satisfied: $0.05 \leq E / n \leq 0.90$ where E is a normalized phase at a boundary between the first region and the second region in the same annulus, and n is a designed diffraction order.

12. The optical element according to any one of claims 1 to 11, **characterized in that** the following inequality is satisfied: $0.10 \leq P / λ 0 \leq 1.20$ where P is a period of the concavo-convex structure, and λ0 is a reference wavelength.

13. The optical element according to any one of claims 1 to 12, **characterized in that** the following inequality is satisfied: $0.05 \leq Hs / λ 0 \leq 0.90$ where Hs is a height of the base layer in a direction perpendicular to the radial direction, and λ0 is a reference wavelength.

14. The optical element according to any one of claims 1 to 13, **characterized in that** the first structures include, in order from a substrate side, a third region and a fourth region having an element filling factor lower than that of the third region, in a direction perpendicular to the radial direction,
wherein the following inequality is satisfied: $0.05 \leq Ha / λ 0 \leq 0.90$ where Ha is a height of the fourth region in the direction perpendicular to the radial direction, and λ0 a reference wavelength.

15. The optical element according to any one of claims 1 to 14, **characterized in that** the following inequality is satisfied: $0.0 \leq Hm / t \leq 0.1$ where Hm is a height of each of the plurality of structures in a direction perpendicular to the radial direction, and t is a thickness of the substrate in an optical axis direction.

16. The optical element according to any one of claims 1 to 15, **characterized in that** the following inequality is satisfied: $0.05 \leq ΔW 1 / P \leq 0.80$ where ΔW1 is a difference between a maximum width and a minimum width of the first structures, and P is a period of the concavo-convex structure.

17. The optical element according to any one of claims 1 to 16, **characterized in that** the following inequality is satisfied: $0.05 \leq ΔW 2 / P \leq 0.80$ where ΔW2 is a difference between a maximum width and a minimum width of the second structures, and P is a period of the concavo-convex structure.

18. The optical element according to any one of claims 1 to 17, **characterized in that** the first region is disposed closer to a center of the optical element than the second region in the radial direction.

19. The optical element according to any one of claims 1 to 18, **characterized in that** the second region is disposed closer to a center of the optical element than the first region in the radial direction.

20. An image sensor comprising:
the optical element (100) according to any one of claims 1 to 19; and
a photoelectric converter configured to convert light from the optical element into electric charges.

21. An optical system comprising:
a plurality of optical elements including the optical element (100) according to any one of claims 1 to 19.

22. An image pickup apparatus (6) comprising:
the optical system (3) according to claim 21; and
an image sensor (5) configured to receive an image formed by the optical system.
